# EUROPEAN PATENT APPLICATION

(11) **EP 4 434 836 A1**
(43) Date of publication of application: **25.09.2024**
(21) Application number: 22918367.8
(22) Date of filing: 13.12.2022
(51) Int. Cl.: B60W 20/13

(54) **HYBRID VEHICLE, POWER GENERATION METHOD AND APPARATUS THEREOF, AND VEHICLE CONTROLLER**

(30) Priority: 04.01.2022 CN 202210002120
(71) Applicant: BYD Company Limited, Shenzhen, Guangdong 518118 (CN)
(72) Inventor: HAN, Yi, Shenzhen, Guangdong 518118 (CN); PENG, Bo, Shenzhen, Guangdong 518118 (CN); ZHU, Futang, Shenzhen, Guangdong 518118 (CN); WANG, Chunsheng, Shenzhen, Guangdong 518118 (CN)
(74) Representative: Dehns Germany Partnerschaft mbB
(86) International application number: PCT/CN2022/138694
(87) International publication number: WO 2023/130917

(57) **Abstract**

A hybrid electric vehicle, an electricity generation method and apparatus therefor, and a vehicle controller are provided. The method includes: obtaining position information of the hybrid electric vehicle, proportions of different vehicle speed ranges within preset time, and proportions of different gradient ranges of a road on which the hybrid electric vehicle is located within the preset time (S 101); determining a current operating condition of the hybrid electric vehicle according to the position information, the proportions of different vehicle speed ranges, and the proportions of different gradient ranges (S102); obtaining corresponding target electricity generation power according to the operating condition (S 103); and controlling the hybrid electric vehicle to generate electricity according to the target electricity generation power (S104).

## Description

### CROSS-REFERENCE TO RELATED APPLICATIONS

This application claims priority to and benefits of Chinese Patent Application No. 202210002120.X, entitled "HYBRID ELECTRIC VEHICLE, ELECTRICITY GENERATION METHOD AND APPARATUS THEREFOR, AND VEHICLE CONTROLLER", and filed on January 4, 2022. The entire content of the above-referenced application is incorporated herein by reference.

### FIELD

The present disclosure relates to the field of hybrid electric vehicle technologies, and in particular, to a hybrid electric vehicle, an electricity generation method and apparatus therefor, and a vehicle controller.

### BACKGROUND

With the rapid development of hybrid electric vehicles, a whole-vehicle electricity generation strategy of the hybrid electric vehicles also becomes increasingly important. An existing whole-vehicle electricity generation strategy is to obtain a driving signal according to a behavioral action of a driver, and then to determine a driving operating condition of a whole-vehicle. However, the whole-vehicle electricity generation strategy determines the operating condition only based on an obtained driving signal. If the driver is in a fatigue driving state, a reasonable driving signal cannot be obtained, and consequently reasonable prediction cannot be performed on the driving operating condition of the vehicle. In addition, the whole-vehicle electricity generation strategy is relatively single and fixed, and cannot meet a whole-vehicle electricity generation requirement in a low SOC state, reducing the fuel economy of the hybrid electric vehicles.

### SUMMARY

The present disclosure aims to resolve at least one of the technical problems in the related art to some extent. Therefore, the present disclosure provides an electricity generation method for a hybrid electric vehicle. The method determines a current operating condition by obtaining position information of the hybrid electric vehicle, proportions of different vehicle speed ranges, and proportions of different gradient ranges, so that prediction of a driving operating condition of the vehicle is more reasonable. In addition, by controlling the hybrid electric vehicle to generate electricity in different operating conditions by using different electricity generation strategies, whole-vehicle electricity generation requirements of the hybrid electric vehicle in different operating conditions and in a low SOC state are satisfied, thereby achieving an objective of improving the fuel economy of the hybrid electric vehicle.

The present disclosure further provides an electricity generation apparatus for a hybrid electric vehicle.

The present disclosure further provides a vehicle controller.

The present disclosure further provides a hybrid electric vehicle.

According to a first aspect of the present disclosure, an embodiment provides an electricity generation method for a hybrid electric vehicle. The method includes: position information of the hybrid electric vehicle, proportions of different vehicle speed ranges within preset time, and proportions of different gradient ranges of a road on which the hybrid electric vehicle is located within the preset time are obtained; a current operating condition of the hybrid electric vehicle is determined according to the position information, the proportions of different vehicle speed ranges, and the proportions of different gradient ranges; corresponding target electricity generation power is obtained according to the operating condition; and the hybrid electric vehicle is controlled to generate electricity according to the target electricity generation power.

According to the electricity generation method for a hybrid electric vehicle in this embodiment of the present disclosure, the position information of the hybrid electric vehicle, the proportions of different vehicle speed ranges within the preset time, and the proportions of different gradient ranges of the road on which the hybrid electric vehicle is located within the preset time are obtained, the current operating condition of the hybrid electric vehicle is determined according to the obtained position information, the obtained proportions of different vehicle speed ranges, and the obtained proportions of different gradient ranges, the corresponding target electricity generation power is obtained according to the current operating condition, and the hybrid electric vehicle is controlled to generate electricity according to the target electricity generation power. Therefore, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

According to an embodiment of the present disclosure, that a current operating condition of the hybrid electric vehicle is determined according to the position information, the proportions of different vehicle speed ranges, and the proportions of different gradient ranges includes: it is determined that the operating condition is an urban operating condition when the position information is an urban road, a proportion of a first vehicle speed range is greater than a first proportion threshold, and a proportion of a first gradient range is less than a fourth proportion threshold; it is determined that the operating condition is a provincial road/suburban operating condition when the position information is a provincial road/suburban road, a proportion of a second vehicle speed range is greater than a second proportion threshold, and the proportion of the first gradient range is less than the fourth proportion threshold, where a vehicle speed in the second vehicle speed range is greater than a vehicle speed in the first vehicle speed range; it is determined that the operating condition is a high-speed operating condition when the position information is a high-speed road, a proportion of a third vehicle speed range is greater than a third proportion threshold, and the proportion of the first gradient range is less than the fourth proportion threshold, where a vehicle speed in the third vehicle speed range is greater than the vehicle speed in the second vehicle speed range; and it is determined that the operating condition is a mountain road operating condition when the proportion of the first gradient range is greater than or equal to the fourth proportion threshold, where the proportion of the first gradient range is a proportion of a gradient greater than a first gradient.

According to an embodiment of the present disclosure, that corresponding target electricity generation power is obtained according to the operating condition includes: initial electricity generation power of the hybrid electric vehicle is obtained; a corresponding correction coefficient is obtained according to the operating condition; and the target electricity generation power is obtained by correcting the initial electricity generation power according to the correction coefficient.

According to an embodiment of the present disclosure, that a corresponding correction coefficient is obtained according to the operating condition includes: when the operating condition is the urban operating condition, the correction coefficient is a first coefficient; when the operating condition is the provincial road/suburban operating condition, the correction coefficient is a second coefficient; when the operating condition is the mountain road operating condition, the correction coefficient is a third coefficient; and when the operating condition is the high-speed operating condition, the correction coefficient is a fourth coefficient. When a current SOC of a power battery in the hybrid electric vehicle is greater than an SOC balancing point, the first coefficient, the second coefficient, the third coefficient, and the fourth coefficient are 1, and when the SOC is less than or equal to the SOC balancing point, the first coefficient, the second coefficient, the third coefficient, and the fourth coefficient are greater than 1, and the fourth coefficient is greater than the third coefficient, the third coefficient is greater than the second coefficient, and the second coefficient is greater than the first coefficient..

According to an embodiment of the present disclosure, that initial electricity generation power of the hybrid electric vehicle is obtained includes: driving required power of the hybrid electric vehicle and a current SOC of a power battery are obtained; and the initial electricity generation power is obtained according to the driving required power and the current SOC.

According to an embodiment of the present disclosure, when the driving required power is constant, the initial electricity generation power is negatively correlated with the current SOC; and when the current SOC is constant, the initial electricity generation power is positively correlated with the driving required power.

According to an embodiment of the present disclosure, the method further includes: the driving required power of the hybrid electric vehicle and the current SOC of the power battery are obtained; and the position information of the hybrid electric vehicle, the proportions of different vehicle speed ranges within the preset time, and the proportions of different gradient ranges of the road on which the hybrid electric vehicle is located within the preset time are obtained when it is determined, based on the driving required power and the current SOC, that the hybrid electric vehicle needs to be controlled to generate electricity.

According to an embodiment of the present disclosure, after the driving required power of the hybrid electric vehicle and the current SOC of the power battery are obtained, the method further includes: a corresponding SOC electricity generation range is determined according to the driving required power, and it is determined, if the current SOC falls within the SOC electricity generation range, that the hybrid electric vehicle needs to be controlled to generate electricity; or a corresponding driving required power electricity generation range is determined according to the current SOC, and it is determined, if the driving required power falls within the driving required power electricity generation range, that the hybrid electric vehicle needs to be controlled to generate electricity.

According to a second aspect of the present disclosure, an embodiment provides an electricity generation apparatus for a hybrid electric vehicle. The apparatus includes: an obtaining module, configured to obtain position information of the hybrid electric vehicle, proportions of different vehicle speed ranges within preset time, and proportions of different gradient ranges of a road on which the hybrid electric vehicle is located within the preset time; an operating condition recognition module, configured to determine a current operating condition of the hybrid electric vehicle according to the position information, the proportions of different vehicle speed ranges, and the proportions of different gradient ranges; an electricity generation power obtaining module, configured to obtain corresponding target electricity generation power according to the operating condition; and a control module, configured to control the hybrid electric vehicle to generate electricity according to the target electricity generation power.

According to the electricity generation apparatus for a hybrid electric vehicle in this embodiment of the present disclosure, the position information of the hybrid electric vehicle, the proportions of different vehicle speed ranges within the preset time, and the proportions of different gradient ranges of the road on which the hybrid electric vehicle is located within the preset time are obtained through the obtaining module, the current operating condition of the hybrid electric vehicle is determined through the operating condition recognition module according to the obtained position information, the obtained proportions of different vehicle speed ranges, and the obtained proportions of different gradient ranges, the corresponding target electricity generation power is obtained through the electricity generation power obtaining module according to the current operating condition, and the hybrid electric vehicle is controlled by the control module to generate electricity according to the target electricity generation power. Therefore, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

According to a third aspect of the present disclosure, an embodiment provides a vehicle controller, including: a memory, a processor, and an electricity generation program of a hybrid electric vehicle stored in the memory and executable on the processor. The processor, when executing the program, implements the electricity generation method for a hybrid electric vehicle according to the embodiments of the first aspect.

According to the vehicle controller in this embodiment of the present disclosure, through the electricity generation method for a hybrid electric vehicle, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

According to a fourth aspect of the present disclosure, an embodiment provides a hybrid electric vehicle, including the electricity generation apparatus for a hybrid electric vehicle according to the embodiments of the second aspect.

According to the vehicle controller in this embodiment of the present disclosure, through the electricity generation method for a hybrid electric vehicle, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

Other aspects and advantages of the present disclosure will be given in the following description, some of which will become apparent from the following description or may be learned from practices of the present disclosure.

### BRIEF DESCRIPTION OF THE DRAWINGS

FIG. 1 is a flowchart of an electricity generation method for a hybrid electric vehicle according to an embodiment of the present disclosure;
FIG. 2 is a flowchart of obtaining corresponding target electricity generation power according to an operating condition according to an embodiment of the present disclosure;
FIG. 3 is a schematic diagram of an electricity generation method for a hybrid electric vehicle according to an embodiment of the present disclosure; and
FIG. 4 is a schematic structural diagram of an electricity generation apparatus for a hybrid electric vehicle according to an embodiment of the present disclosure.

### DETAILED DESCRIPTION

Embodiments of the present disclosure are described below in detail. Examples of the embodiments are shown in the accompanying drawings, and in the accompanying drawings, the same or similar elements and elements having same or similar functions are denoted by same or similar reference numerals throughout. The following embodiments described with reference to the accompanying drawings are exemplary, and are intended to describe the present disclosure and cannot be construed as a limitation to the present disclosure.

A hybrid electric vehicle, an electricity generation method and apparatus therefor, and a vehicle controller according to the embodiments of the present disclosure are described below with reference to the accompanying drawings.

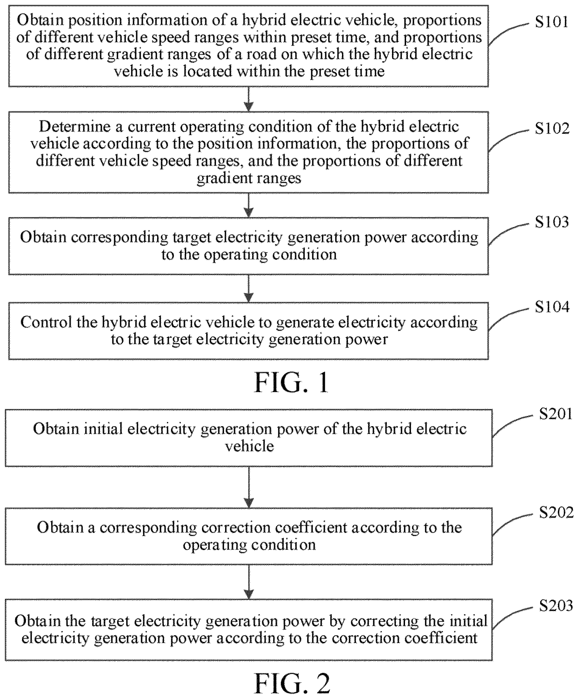

FIG. 1 is a flowchart of an electricity generation method for a hybrid electric vehicle according to an embodiment of the present disclosure. As shown in FIG. 1, the electricity generation method for a hybrid electric vehicle includes the following steps.

Step S101: Obtain position information of the hybrid electric vehicle, proportions of different vehicle speed ranges within preset time, and proportions of different gradient ranges of a road on which the hybrid electric vehicle is located within the preset time.

It should be noted that if only a single and fixed electricity generation strategy is used during driving of the hybrid electric vehicle, it is difficult to meet electricity generation requirements of the hybrid electric vehicle when different driving operating conditions are encountered. To ensure that an engine of the hybrid electric vehicle can operate at an optimal point under various driving operating conditions to achieve reduction in fuel consumption of the hybrid electric vehicle and achieve an objective of improving the fuel economy of the hybrid electric vehicle, an optimal electricity generation strategy for the hybrid electric vehicle to travel under different driving operating conditions needs to be obtained, and a corresponding electricity generation strategy is used according to a current driving operating condition of the hybrid electric vehicle, thereby meeting the electricity generation requirements of the hybrid electric vehicle under different driving operating conditions.

Specifically, a current driving environment and current road condition information of a hybrid electric vehicle are detected in real time through an in-vehicle high-precision map system, an in-vehicle Global Positioning System (GPS), and an in-vehicle vehicle sensor, including data such as a position of the hybrid electric vehicle, a vehicle speed, an acceleration, a gradient, an environmental temperature, and an elevation, and the real-time detected data is integrated to obtain a current driving status of the hybrid electric vehicle. For example, a current driving position of the hybrid electric vehicle is obtained through the in-vehicle high-precision map system, if the in-vehicle high-precision map system displays that the hybrid electric vehicle is currently traveling on an urban road, the obtained current position information of the hybrid electric vehicle is an urban road; if the in-vehicle high-precision map system displays that the hybrid electric vehicle is currently traveling on a provincial road/suburban road, the obtained current position information of the hybrid electric vehicle is a provincial road/suburban road; and if the in-vehicle high-precision map system displays that the hybrid electric vehicle is currently traveling on a high-speed road, the obtained current position information of the hybrid electric vehicle is a high-speed road. A driving speed of the current hybrid electric vehicle may be obtained through the in-vehicle GPS, and proportions of different vehicle speed ranges within the preset time to the preset time are obtained according to the driving speed, to form the proportions of different vehicle speed ranges. An inclination of the current hybrid electric vehicle may further be obtained through the in-vehicle vehicle sensor, and a gradient of a road on which the current hybrid electric vehicle is traveling is determined according to the obtained inclination angle, thereby obtaining proportions of different gradient ranges of the road on which the hybrid electric vehicle is traveling within the preset time to the preset time. Because the driving status of the vehicle is obtained in real time through the in-vehicle high-precision map system, the in-vehicle GPS, and the in-vehicle vehicle sensor, recognition and prediction of the current driving operating condition have certain timeliness.

Step S102: Determine a current operating condition of the hybrid electric vehicle according to the position information, the proportions of different vehicle speed ranges, and the proportions of different gradient ranges.

Specifically, comprehensive determination is performed according to the obtained position information of the hybrid electric vehicle, the obtained proportions of different vehicle speed ranges, and the obtained proportions of different gradient ranges, to determine the current driving operating condition of the hybrid electric vehicle.

In some embodiments, that determine a current operating condition of the hybrid electric vehicle according to the position information, the proportions of different vehicle speed ranges, and the proportions of different gradient ranges includes: it is determined that the operating condition is an urban operating condition when the position information is an urban road, a proportion of a first vehicle speed range is greater than a first proportion threshold, and a proportion of a first gradient range is less than a fourth proportion threshold; it is determined that the operating condition is a provincial road/suburban operating condition when the position information is a provincial road/suburban road, a proportion of a second vehicle speed range is greater than a second proportion threshold, and the proportion of the first gradient range is less than the fourth proportion threshold, where a vehicle speed in the second vehicle speed range is greater than a vehicle speed in the first vehicle speed range; it is determined that the operating condition is a high-speed operating condition when the position information is a high-speed road, a proportion of a third vehicle speed range is greater than a third proportion threshold, and the proportion of the first gradient range is less than the fourth proportion threshold, where a vehicle speed in the third vehicle speed range is greater than the vehicle speed in the second vehicle speed range; and it is determined that the operating condition is a mountain road operating condition when the proportion of the first gradient range is greater than or equal to the fourth proportion threshold, where the proportion of the first gradient range is a proportion of a gradient greater than a first gradient.

Specifically, when it is determined that the hybrid electric vehicle is currently driving on the urban road, the driving speed of the hybrid electric vehicle is obtained in real time. The first vehicle speed range and the first proportion threshold are preset in a system of the hybrid electric vehicle for an urban road road condition, and within the preset time, a proportion of time in which the driving speed of the hybrid electric vehicle falls within the first vehicle speed range to the preset time is obtained. In addition, a gradient of the current driving road is obtained in real time during driving of the hybrid electric vehicle. For a driving gradient, the first gradient range and the fourth proportion threshold are preset in the system of the hybrid electric vehicle. A proportion of time in which the driving gradient of the hybrid electric vehicle falls within the first gradient range to the preset time is obtained within the preset time. When the proportion of the driving speed of the hybrid electric vehicle falling within the first vehicle speed range is greater than the first proportion threshold and the proportion of the driving gradient of the hybrid electric vehicle falling within the first gradient range is less than the fourth proportion threshold, it is determined that the current operating condition of the hybrid electric vehicle is the urban operating condition.

When it is determined that the hybrid electric vehicle is currently driving on the provincial road/suburban road, the driving speed of the hybrid electric vehicle is obtained in real time. For the provincial road/suburban road road condition, the second vehicle speed range and the second proportion threshold are preset in the system of the hybrid electric vehicle. Within the preset time, a proportion of time in which the driving speed of the hybrid electric vehicle falls within the second vehicle speed range to the preset time is obtained. The vehicle speed in the second vehicle speed range is greater than the vehicle speed in the first vehicle speed range. For example, the first vehicle speed range is [0 km/h, 60 km/h), and the second vehicle speed range is [60 km/h, 80 km/h). In this embodiment, the first vehicle speed range and the second vehicle speed range may or may not be adjacent to each other. For example, the second vehicle speed range may alternatively be set to [65km/h, 80km/h), provided that the vehicle speed in the second vehicle speed range is greater than the vehicle speed in the first vehicle speed range. In addition, the proportion of time in which the driving gradient falls within the first gradient range to the preset time is obtained during driving of the hybrid electric vehicle. When the proportion of the driving speed of the hybrid electric vehicle falling within the second vehicle speed range is greater than the second proportion threshold and the proportion of the driving gradient of the hybrid electric vehicle falling within the first gradient range is less than the fourth proportion threshold, it is determined that the current operating condition of the hybrid electric vehicle is the provincial road/suburban operating condition.

When it is determined that the hybrid electric vehicle is currently driving on the high-speed road, the driving speed of the hybrid electric vehicle is obtained in real time. For the high-speed road road condition, the third vehicle speed range and the third proportion threshold are preset in the system of the hybrid electric vehicle. Within the preset time, a proportion of time in which the driving speed of the hybrid electric vehicle falls within the third vehicle speed range to the preset time is obtained. It should be noted that, the vehicle speed in the third vehicle speed range is greater than the vehicle speed in the second vehicle speed range. For example, the second vehicle speed range is [60 km/h, 80 km/h), and the third vehicle speed range is [80 km/h, 100 km/h). In this embodiment, the third vehicle speed range and the second vehicle speed range may or may not be adjacent to each other. For example, the third vehicle speed range may alternatively be set to [85 km/h, 100 km/h), provided that the vehicle speed in the third vehicle speed range is greater than the vehicle speed in the second vehicle speed range. In addition, the proportion of time in which the driving gradient falls within the first gradient range to the preset time is obtained during driving of the hybrid electric vehicle. When the proportion of the driving speed of the hybrid electric vehicle falling within the third vehicle speed range is greater than the third proportion threshold and the proportion of the driving gradient of the hybrid electric vehicle falling within the first gradient range is less than the fourth proportion threshold, it is determined that the current operating condition of the hybrid electric vehicle is the high-speed operating condition.

During driving of the hybrid electric vehicle, if a proportion of time in which the obtained gradient of the road on which the hybrid electric vehicle is driving is greater than the first gradient to the preset time is greater than the fourth proportion threshold, it is determined that the current operating condition of the hybrid electric vehicle is the mountain road operating condition. The proportion of the first gradient range is a proportion of a gradient greater than the first gradient. In other words, when it is determined that the proportion of the time in which the gradient of the road on which the hybrid electric vehicle is driving is greater than the first gradient to the preset time is greater than the fourth proportion threshold, the position information and the vehicle speed information of the hybrid electric vehicle are not considered and the operating condition is uniformly determined as the mountain road operating condition.

It should be noted that when the hybrid electric vehicle cannot determine the driving operating condition according to the foregoing determining conditions, it is considered that the operating condition of the hybrid electric vehicle is another operating condition.

Step S103: Obtain corresponding target electricity generation power according to the operating condition.

Specifically, after the current operating condition of the hybrid electric vehicle is determined according to the position information, the proportions of different vehicle speed ranges, and the proportions of different gradient ranges, the target electricity generation power of the hybrid electric vehicle under different operating conditions is obtained, to adopt a corresponding electricity generation strategy, to meet electricity generation requirements under different driving operating conditions.

In some embodiments, as shown in FIG. 2, that obtain a corresponding target electricity generation power according to the operating condition includes:

Step S201: Obtain initial electricity generation power of the hybrid electric vehicle.

In some embodiments, that obtain initial electricity generation power of the hybrid electric vehicle includes: driving required power of the hybrid electric vehicle and a current SOC of a power battery are obtained; and the initial electricity generation power is obtained according to the driving required power and the current SOC.

Specifically, during driving of the hybrid electric vehicle, data such as the vehicle speed, the acceleration, the gradient, the temperature, and the elevation of the current hybrid electric vehicle is obtained in real time according to the in-vehicle high-precision map system, the in-vehicle GPS (Global Positioning System), and the in-vehicle vehicle sensor, and the driving required power of the hybrid electric vehicle is calculated according to the foregoing data such as the vehicle speed, the acceleration, the gradient, the temperature, and the elevation of the hybrid electric vehicle. In addition, the current SOC of the power battery is obtained through the hybrid electric vehicle system, and the initial electricity generation power of the hybrid electric vehicle is obtained according to the obtained driving required power and the current SOC (that is, a minimum SOC battery discharge capability).

In some embodiments, when the driving required power is constant, the initial electricity generation power is negatively correlated with the current SOC; and when the current SOC is constant, the initial electricity generation power is positively correlated with the driving required power. In other words, the initial electricity generation power of the hybrid electric vehicle is determined by the driving required power and the current SOC. The initial electricity generation power increases with a decrease in the current SOC and an increase in the driving required power. When the driving required power is constant, the initial electricity generation power is negatively correlated with the SOC, and when the current SOC is constant, the initial electricity generation power is positively correlated with the driving power demand.

Step S202: Obtain a corresponding correction coefficient according to the operating condition.

Specifically, the correction coefficient corresponding to the operating condition is obtained according to the operating condition of the hybrid electric vehicle, so that an optimal electricity generation strategy is used during driving of the hybrid electric vehicle under the operating condition.

In some embodiments, that obtain a corresponding correction coefficient according to the operating condition includes: when the operating condition is the urban operating condition, the correction coefficient is a first coefficient; when the operating condition is the provincial road/suburban operating condition, the correction coefficient is a second coefficient; when the operating condition is the mountain road operating condition, the correction coefficient is a third coefficient; and when the operating condition is the high-speed operating condition, the correction coefficient is a fourth coefficient. When a current SOC of a power battery in the hybrid electric vehicle is greater than an SOC balancing point, the first coefficient, the second coefficient, the third coefficient, and the fourth coefficient are 1, and when the SOC is less than or equal to the SOC balancing point, the first coefficient, the second coefficient, the third coefficient, and the fourth coefficient are greater than 1, and the fourth coefficient is greater than the third coefficient, the third coefficient is greater than the second coefficient, and the second coefficient is greater than the first coefficient..

Specifically, the hybrid electric vehicle presets a first coefficient a, a second coefficient b, a third coefficient c, and a fourth coefficient d according to different driving operating conditions, and presets the SOC balancing point in the power battery. When the current SOC of the power battery is less than or equal to the SOC balancing point, the first coefficient a, the second coefficient b, the third coefficient c, and the fourth coefficient d are all set to be greater than 1. In other words, when the current SOC of the power battery is less than or equal to the SOC balancing point, to avoid that the SOC of the whole-vehicle power battery is less than a minimum allowable SOC and maintain the whole-vehicle SOC above the minimum SOC, the electricity generation power of the hybrid electric vehicle needs to be corrected, and corresponding correction coefficients for different operating conditions of the hybrid electric vehicle are also different. When it is determined that the current operating condition of the hybrid electric vehicle is the urban operating condition, the correction coefficient is the first coefficient a; and when it is determined that the current operating condition of the hybrid electric vehicle is the provincial road/suburban operating condition, the correction coefficient is the second coefficient b; and when it is determined that the current operating condition of the hybrid electric vehicle is the mountain road operating condition, the correction coefficient is the third coefficient c; when it is determined that the current operating condition of the hybrid electric vehicle is the high-speed operating condition, the correction coefficient is the fourth coefficient d, where the fourth coefficient d > the third coefficient c > the second coefficient b > the first coefficient a; and when the current SOC of the power battery of the hybrid electric vehicle is greater than the SOC balancing point, the first coefficient a, the second coefficient b, the third coefficient c, and the fourth coefficient d are all set to 1. In other words, when the current SOC of the power battery of the hybrid electric vehicle is greater than the SOC balancing point, regardless of the operating condition of the hybrid electric vehicle, the initial electricity generation power is not corrected.

Step S203: Correct the initial electricity generation power according to the correction coefficient to obtain the target electricity generation power.

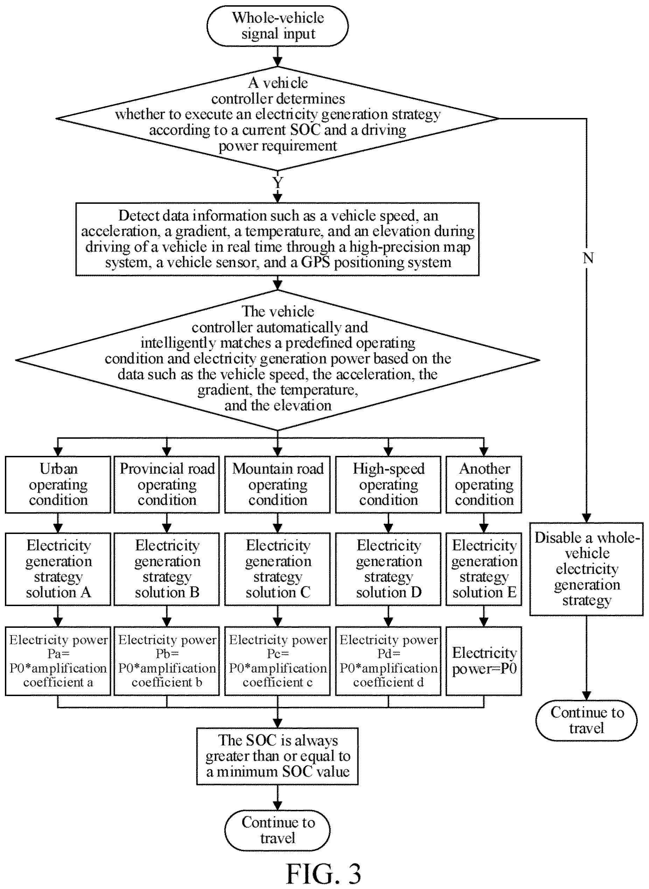

Specifically, when the current SOC of the power battery is less than or equal to the SOC balancing point, the target electricity generation power under the operating condition is obtained by multiplying, according to correction coefficients of different operating conditions, the initial electricity generation power by the correction coefficient of the operating condition. As shown in FIG. 3, different operating conditions use different electricity generation strategies, and under different electricity generation strategies, the electricity generation powers of the different operating conditions are calculated according to different correction coefficients. When a driving demand of a driver is met, the whole-vehicle SOC can be prevented from being lower than the minimum SOC value, so that the whole-vehicle SOC is always maintained above the minimum SOC value, that is, the whole-vehicle electricity generation requirements in different operating conditions in a low-SOC state is met; and when the current SOC of the power battery is greater than the SOC balancing point, there is no need to correct the initial electricity generation power, that is, the initial electricity generation power of the hybrid electric vehicle is the target electricity generation power of the hybrid electric vehicle.

It should be noted that when the hybrid electric vehicle is determined to be in another operating condition, there is also no need to correct the initial electricity generation power, that is, the initial electricity generation power of the hybrid electric vehicle is the target electricity generation power of the hybrid electric vehicle.

Step S 104: Control the hybrid electric vehicle to generate electricity according to the target electricity generation power.

Specifically, after the target electricity generation power is obtained, when the hybrid electric vehicle is driving in different operating conditions, the hybrid electric vehicle is controlled to generate electricity according to the target electricity generation power corrected according to the corresponding operating condition, thereby meeting electricity generation requirements of the hybrid electric vehicle in different driving operating conditions.

In some embodiments, the foregoing electricity generation method for a hybrid electric vehicle further includes: the driving required power of the hybrid electric vehicle and the current SOC of the power battery are obtained; and the position information of the hybrid electric vehicle, the proportions of different vehicle speed ranges within the preset time, and the proportions of different gradient ranges of the road on which the hybrid electric vehicle is located within the preset time are obtained when it is determined, based on the driving required power and the current SOC, that the hybrid electric vehicle needs to be controlled to generate electricity.

After the driving required power of the hybrid electric vehicle and the current SOC of the power battery are obtained, the method further includes: a corresponding SOC electricity generation range is determined according to the driving required power, and it is determined, if the current SOC falls within the SOC electricity generation range, that the hybrid electric vehicle needs to be controlled to generate electricity; or a corresponding driving required power electricity generation range is determined according to the current SOC, and it is determined, if the driving required power falls within the driving required power electricity generation range, that the hybrid electric vehicle needs to be controlled to generate electricity.

Specifically, during driving of the hybrid electric vehicle, the driving required power and the current SOC of the power battery are obtained in real time through the hybrid electric vehicle system, and the corresponding SOC electricity generation range is determined according to the driving required power and the corresponding driving demand electricity generation range is determined according to the current SOC. If the current SOC falls within the SOC electricity generation range or the driving required power falls within the driving required power electricity generation range, the hybrid electric vehicle needs to be controlled to generate electricity. Otherwise, the whole-vehicle electricity generation strategy is not enabled, and the hybrid electric vehicle continues to travel. As shown in FIG. 3, when it is determined that the whole-vehicle electricity generation strategy needs to be enabled, data such as the position, the vehicle speed, the acceleration, the gradient, the environmental temperature, and the elevation of the hybrid electric vehicle is obtained in real time through the in-vehicle high-precision map system, the in-vehicle GPS, and the in-vehicle vehicle sensor, and the real-time detected data is integrated, to obtain the position information of the current hybrid electric vehicle, the proportions of different vehicle speed ranges within the preset time, and the proportions of different gradient ranges of the road on which the hybrid electric vehicle is located within the preset time. The current driving operating condition of the hybrid electric vehicle is determined according to the obtained position information of the hybrid electric vehicle, the obtained proportions of different vehicle speed ranges, and the obtained proportions of different gradient ranges, and different electricity generation strategies are used according to different driving operating conditions, so that it can be ensured that the engine of the hybrid electric vehicle can be operated at an optimal point under various driving operating conditions, and the fuel consumption of the hybrid electric vehicle can be reduced, thereby achieving the objective of improving the fuel economy of the hybrid electric vehicle.

In conclusion, according to the electricity generation method for a hybrid electric vehicle in the embodiments of the present disclosure, the position information of the hybrid electric vehicle, the proportions of different vehicle speed ranges within the preset time, and the proportions of different gradient ranges of the road on which the hybrid electric vehicle is located within the preset time are obtained, the current operating condition of the hybrid electric vehicle is determined according to the obtained position information, the obtained proportions of different vehicle speed ranges, and the proportions of different gradient ranges, the corresponding target electricity generation power is obtained according to the current operating condition, and the hybrid electric vehicle is controlled to generate electricity according to the target electricity generation power. Therefore, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

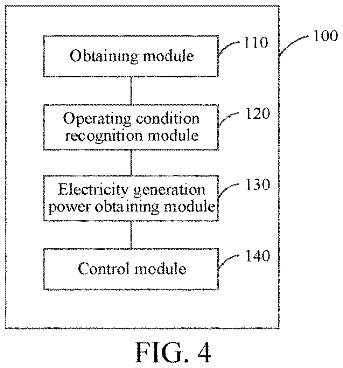

FIG. 4 is a schematic structural diagram of an electricity generation apparatus for a hybrid electric vehicle according to an embodiment of the present disclosure. As shown in FIG. 4, an electricity generation apparatus 100 for a hybrid electric vehicle includes: an obtaining module 110, an operating condition recognition module 120, an electricity generation power obtaining module 130, and a control module 140.

The obtaining module 110 is configured to obtain position information of the hybrid electric vehicle, proportions of different vehicle speed ranges within preset time, and proportions of different gradient ranges of a road on which the hybrid electric vehicle is located within the preset time; the operating condition recognition module 120 is configured to determine a current operating condition of the hybrid electric vehicle according to the position information, the proportions of different vehicle speed ranges, and the proportions of different gradient ranges; the electricity generation power obtaining module 130 is configured to obtain corresponding target electricity generation power according to the operating condition; and the control module 140 is configured to control the hybrid electric vehicle to generate electricity according to the target electricity generation power.

In some embodiments, the operating condition recognition module 120 is further specifically configured to: determine that the operating condition is an urban operating condition when the position information is an urban road, a proportion of a first vehicle speed range is greater than a first proportion threshold, and a proportion of a first gradient range is less than a fourth proportion threshold; determine that the operating condition is a provincial road/suburban operating condition when the position information is a provincial road/suburban road, a proportion of a second vehicle speed range is greater than a second proportion threshold, and the proportion of the first gradient range is less than the fourth proportion threshold, where a vehicle speed in the second vehicle speed range is greater than a vehicle speed in the first vehicle speed range; determine that the operating condition is a high-speed operating condition when the position information is a high-speed road, a proportion of a third vehicle speed range is greater than a third proportion threshold, and the proportion of the first gradient range is less than the fourth proportion threshold, where a vehicle speed in the third vehicle speed range is greater than the vehicle speed in the second vehicle speed range; and determine that the operating condition is a mountain road operating condition when the proportion of the first gradient range is greater than or equal to the fourth proportion threshold, where the proportion of the first gradient range is a proportion of a gradient greater than a first gradient.

In some embodiments, the electricity generation power obtaining module 130 is further specifically configured to: obtain initial electricity generation power of the hybrid electric vehicle; obtain a corresponding correction coefficient according to the operating condition; and correct the initial electricity generation power according to the correction coefficient to obtain the target electricity generation power.

In some embodiments, the electricity generation power obtaining module 130 is further specifically configured to determine that: when the operating condition is the urban operating condition, the correction coefficient is a first coefficient; when the operating condition is the provincial road/suburban operating condition, the correction coefficient is a second coefficient; when the operating condition is the mountain road operating condition, the correction coefficient is a third coefficient; and when the operating condition is the high-speed operating condition, the correction coefficient is a fourth coefficient. When a current SOC of a power battery in the hybrid electric vehicle is greater than an SOC balancing point, the first coefficient, the second coefficient, the third coefficient, and the fourth coefficient are 1, and when the SOC is less than or equal to the SOC balancing point, the first coefficient, the second coefficient, the third coefficient, and the fourth coefficient are greater than 1, and the fourth coefficient is greater than the third coefficient, the third coefficient is greater than the second coefficient, and the second coefficient is greater than the first coefficient..

In some embodiments, the electricity generation power obtaining module 130 is further specifically configured to: obtain the driving required power of the hybrid electric vehicle and the current SOC of the power battery; and obtain the initial electricity generation power according to the driving required power and the current SOC.

In some embodiments, when the driving required power is constant, the initial electricity generation power is negatively correlated with the current SOC. When the current SOC is constant, the initial electricity generation power is positively correlated with the driving required power.

In some embodiments, the obtaining module 110 is further specifically configured to: obtain the driving required power of the hybrid electric vehicle and the current SOC of the power battery; and obtain the position information of the hybrid electric vehicle, the proportions of different vehicle speed ranges within the preset time, and the proportions of different gradient ranges of the road on which the hybrid electric vehicle is located within the preset time when it is determined, based on the driving required power and the current SOC, that the hybrid electric vehicle needs to be controlled to generate electricity.

In some embodiments, the foregoing electricity generation apparatus for a hybrid electric vehicle further includes an electricity generation determining module (not shown in the figure), which is specifically configured to: determine a corresponding SOC electricity generation range according to the driving required power, and determine, if the current SOC falls within the SOC electricity generation range, that the hybrid electric vehicle needs to be controlled to generate electricity; or determine a corresponding driving required power electricity generation range according to the current SOC, and determine, if the driving required power falls within the driving required power electricity generation range, that the hybrid electric vehicle needs to be controlled to generate electricity.

It should be noted that for the descriptions of the electricity generation apparatus for a hybrid electric vehicle in the present disclosure, refer to the descriptions of the electricity generation method for a hybrid electric vehicle in the present disclosure. Details are not described herein again.

According to the electricity generation apparatus for a hybrid electric vehicle in this embodiment of the present disclosure, the position information of the hybrid electric vehicle, the proportions of different vehicle speed ranges within the preset time, and the proportions of different gradient ranges of the road on which the hybrid electric vehicle is located within the preset time are obtained through the obtaining module, the current operating condition of the hybrid electric vehicle is determined through the operating condition recognition module according to the obtained position information, the obtained proportions of different vehicle speed ranges, and the obtained proportions of different gradient ranges, the corresponding target electricity generation power is obtained through the electricity generation power obtaining module according to the current operating condition, and the hybrid electric vehicle is controlled by the control module to generate electricity according to the target electricity generation power. Therefore, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

The embodiments of the present disclosure further provide a vehicle controller, including: a memory, a processor, and an electricity generation program of a hybrid electric vehicle stored in the memory and executable on the processor. The processor, when executing the program, implements the electricity generation method for a hybrid electric vehicle.

According to the vehicle controller in this embodiment of the present disclosure, through the electricity generation method for a hybrid electric vehicle, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

The embodiments of the present disclosure further provide a hybrid electric vehicle, including the foregoing electricity generation apparatus for a hybrid electric vehicle.

According to the vehicle controller in this embodiment of the present disclosure, through the electricity generation method for a hybrid electric vehicle, the current operating condition is determined by obtaining the position information of the hybrid electric vehicle, the proportions of different vehicle speed ranges, and the proportions of different gradient ranges, so that the prediction of the driving operating condition of the vehicle is more reasonable. In addition, by controlling the hybrid electric vehicle to generate electricity in different operating conditions by using different electricity generation strategies, the whole-vehicle electricity generation requirements of the hybrid electric vehicle in different operating conditions and in a low SOC state are satisfied, thereby achieving the objective of improving the fuel economy of the hybrid electric vehicle.

It should be noted that the logic and/or steps shown in the flowcharts or described in any other manner herein, for example, a sequenced list that may be considered as executable instructions used for implementing logical functions, may be specifically implemented in any computer-readable medium to be used by an instruction execution system, apparatus, or device (for example, a computer-based system, a system including a processor, or another system that can obtain an instruction from the instruction execution system, apparatus, or device and execute the instruction) or to be used by combining such instruction execution systems, apparatuses, or devices. In the context of this specification, a "computer-readable medium" may be any apparatus that can include, store, communicate, propagate, or transmit the program for use by the instruction execution system, apparatus, or device or in combination with the instruction execution system, apparatus, or device. More specific examples (a non-exhaustive list) of the computer-readable medium include the following: an electrical connection (electronic device) having one or more wires, a portable computer diskette (magnetic apparatus), a random access memory (RAM), a read-only memory (ROM), an erasable programmable read-only memory (EPROM or flash memory), an optical fiber apparatus, and a portable compact disk read-only memory (CDROM). In addition, the computer-readable medium can even be paper or other suitable media on which the program can be printed, because the program can be obtained electronically by, for example, optically scanning paper or other media, then editing, interpreting, or processing in other suitable ways if necessary, and then storing it in a computer memory.

It should be understood that, all parts of the present disclosure are realized by hardware, software, firmware or combinations thereof. In the foregoing implementations, a plurality of steps or methods may be implemented by using software or firmware that are stored in a memory and are executed by a proper instruction execution system. For example, if hardware is used for implementation, same as in another implementation, implementation may be performed by any one of the following technologies well known in the art or a combination thereof: a discrete logic circuit including a logic gate circuit for implementing a logic function of a data signal, a dedicated integrated circuit including a proper combined logic gate circuit, a programmable gate array (PGA), a field programmable gate array (FPGA), and the like.

In the descriptions of this specification, descriptions such as reference terms "an embodiment", "some embodiments", "example", "specific example", or "some examples" intend to indicate that specific features, structures, materials, or characteristics described with reference to embodiments or examples are included in at least one embodiment or example of the present disclosure. In this specification, exemplary descriptions of the foregoing terms do not necessarily refer to the same embodiment or example. Moreover, the specific features, structures, materials, or characteristics described may be combined in any one or more embodiments or examples in an appropriate manner.

In addition, the terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the description of the present disclosure, unless otherwise specifically limited, "multiple" means at least two, for example, two or three.

In the present disclosure, unless otherwise clearly specified and limited, terms "mount", "connected", "connect", and "fix" should be understood in a generalized manner, for example, may be understood as fixed connection, detachable connection, or integration; or the connection may be a mechanical connection or an electrical connection; or the connection may be a direct connection, an indirect connection through an intermediate medium, or internal communication between two elements or a mutual action relationship between two elements, unless otherwise explicitly specified. A person of ordinary skill in the art may understand specific meanings of the foregoing terms in the present disclosure according to a specific situation.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. An electricity generation method for a hybrid electric vehicle, the method comprising:
obtaining position information of the hybrid electric vehicle, proportions of different vehicle speed ranges within preset time, and proportions of different gradient ranges of a road on which the hybrid electric vehicle is located within the preset time;
determining a current operating condition of the hybrid electric vehicle according to the position information, the proportions of different vehicle speed ranges, and the proportions of different gradient ranges;
obtaining corresponding target electricity generation power according to the operating condition; and
controlling the hybrid electric vehicle to generate electricity according to the target electricity generation power.

2. The method according to claim 1, wherein the determining a current operating condition of the hybrid electric vehicle according to the position information, the proportions of different vehicle speed ranges, and the proportions of different gradient ranges comprises:
determining that the operating condition is an urban operating condition when the position information is an urban road, a proportion of a first vehicle speed range is greater than a first proportion threshold, and a proportion of a first gradient range is less than a fourth proportion threshold;
determining that the operating condition is a provincial road/suburban operating condition when the position information is a provincial road/suburban road, a proportion of a second vehicle speed range is greater than a second proportion threshold, and the proportion of the first gradient range is less than the fourth proportion threshold, wherein a vehicle speed in the second vehicle speed range is greater than a vehicle speed in the first vehicle speed range;
determining that the operating condition is a high-speed operating condition when the position information is a high-speed road, a proportion of a third vehicle speed range is greater than a third proportion threshold, and the proportion of the first gradient range is less than the fourth proportion threshold, wherein a vehicle speed in the third vehicle speed range is greater than the vehicle speed in the second vehicle speed range; and
determining that the operating condition is a mountain road operating condition when the proportion of the first gradient range is greater than or equal to the fourth proportion threshold, wherein the proportion of the first gradient range is a proportion of a gradient greater than a first gradient.

3. The method according to claim 2, wherein the obtaining corresponding target electricity generation power according to the operating condition comprises:
obtaining initial electricity generation power of the hybrid electric vehicle;
obtaining a corresponding correction coefficient according to the operating condition; and
obtaining the target electricity generation power by correcting the initial electricity generation power according to the correction coefficient.

4. The method according to claim 3, wherein the obtaining a corresponding correction coefficient according to the operating condition comprises:
when the operating condition is the urban operating condition, the correction coefficient being a first coefficient;
when the operating condition is the provincial road/suburban operating condition, the correction coefficient being a second coefficient;
when the operating condition is the mountain road operating condition, the correction coefficient being a third coefficient; and
when the operating condition is the high-speed operating condition, the correction coefficient being a fourth coefficient, wherein
when a current SOC of a power battery in the hybrid electric vehicle is greater than an SOC balancing point, the first coefficient, the second coefficient, the third coefficient, and the fourth coefficient are 1, and when the SOC is less than or equal to the SOC balancing point, the first coefficient, the second coefficient, the third coefficient, and the fourth coefficient are greater than 1, and the fourth coefficient is greater than the third coefficient, the third coefficient is greater than the second coefficient, and the second coefficient is greater than the first coefficient.

5. The method according to claim 3, wherein the obtaining initial electricity generation power of the hybrid electric vehicle comprises:
obtaining driving required power of the hybrid electric vehicle and a current SOC of a power battery; and
obtaining the initial electricity generation power according to the driving required power and the current SOC.

6. The method according to claim 5, wherein when the driving required power is constant, the initial electricity generation power is negatively correlated with the current SOC; and when the current SOC is constant, the initial electricity generation power is positively correlated with the driving required power.

7. The method according to any one of claims 1 to 6, further comprising:
obtaining the driving required power of the hybrid electric vehicle and the current SOC of the power battery; and
obtaining the position information of the hybrid electric vehicle, the proportions of different vehicle speed ranges within the preset time, and the proportions of different gradient ranges of the road on which the hybrid electric vehicle is located within the preset time when it is determined, based on the driving required power and the current SOC, that the hybrid electric vehicle needs to be controlled to generate electricity.

8. The method according to claim 7, after the obtaining the driving required power of the hybrid electric vehicle and the current SOC of the power battery, the method further comprising:
determining a corresponding SOC electricity generation range according to the driving required power, and determining, if the current SOC falls within the SOC electricity generation range, that the hybrid electric vehicle needs to be controlled to generate electricity; or
determining a corresponding driving required power electricity generation range according to the current SOC, and determining, if the driving required power falls within the driving required power electricity generation range, that the hybrid electric vehicle needs to be controlled to generate electricity.

9. An electricity generation apparatus for a hybrid electric vehicle, the apparatus comprising:
an obtaining module, configured to obtain position information of the hybrid electric vehicle, proportions of different vehicle speed ranges within preset time, and proportions of different gradient ranges of a road on which the hybrid electric vehicle is located within the preset time;
an operating condition recognition module, configured to determine a current operating condition of the hybrid electric vehicle according to the position information, the proportions of different vehicle speed ranges, and the proportions of different gradient ranges;
an electricity generation power obtaining module, configured to obtain corresponding target electricity generation power according to the operating condition; and
a control module, configured to control the hybrid electric vehicle to generate electricity according to the target electricity generation power.

10. A vehicle controller, comprising: a memory, a processor, and an electricity generation program of a hybrid electric vehicle stored in the memory and executable on the processor, the processor, when executing the program, implementing the electricity generation method for a hybrid electric vehicle according to any one of claims 1 to 8.

11. A hybrid electric vehicle, comprising the electricity generation apparatus for a hybrid electric vehicle according to claim 9.
